# DEMANDE DE BREVET EUROPEEN

(11) **EP 1 605 639 A2**
(43) Date de publication de la demande: **14.12.2005**
(21) Numéro de dépôt: 05291182.3
(22) Date de dépôt: 01.06.2005
(51) Int. Cl.: H04L 12/28

(54) **Dispositif de programmation par messages**

(30) Priorité: 07.06.2004 FR 0406100
(71) Demandeur: France Télécom, 75015 Paris (FR)
(72) Inventeur: Brunel, Jérôme, 14220 Combray (FR); Grimault, Jean-Luc, 14120 Mondeville (FR); Vongphouthone, Aline, 14000 Caen (FR); Normand, Olivier, 14610 Fontaine Henry (FR)
(74) Mandataire: Maillet, Alain

(57) **Abrégé**

L'invention concerne un dispositif de programmation (100) par messages d'au moins deux systèmes destinataires (116) associés, comprenant:
- un module de réception (102) de messages émis par un émetteur (124, 126);
- un module d'analyse (104) du message ainsi reçu;
- une interface de pilotage (114) entre le module d'analyse (104) et chaque système destinataire (116), ladite interface de pilotage étant adaptée à convertir le message en un ordre de programmation compréhensible par chaque système destinataire (116), lorsque le module d'analyse (104) reconnaît le message comme étant un ordre de programmation de chaque système destinataire (116);
- un module de traitement de messages classiques (118) relié au module d'analyse (104) et adapté à traiter le message en tant que message classique lorsque le module d'analyse (104) ne reconnaît pas le message comme étant un ordre de programmation;
- le module d'analyse (104) reconnaissant le message comme étant un ordre de programmation par reconnaissance d'au moins un mot clé dans le message, et la reconnaissance du mot clé par le module d'analyse (104) engendrant l'envoi d'un message de programmation vers chacun des systèmes destinataires (116) associés

## Description

L'invention concerne un dispositif de programmation par message d'au moins un système destinataire. L'invention concerne aussi un téléphone comprenant un tel dispositif de programmation. L'invention concerne aussi un procédé de programmation d'un système destinataire par un dispositif de programmation par message d'un système destinataire.

Elle trouve application dans le domaine de la programmation à distance des appareils programmables, en particulier dans le domaine de la domotique.

Le brevet FR-B-2 796 796 décrit un système de commande et d'accès à distance à des services de domotique, comme par exemple la commande d'une chaudière d'une habitation. Ce système d'accès utilise des messages courts des téléphones fixes ou mobiles, qui sont constitués de champs contenant des paramètres de commande.

Selon ce brevet, un émetteur, comme un téléphone mobile, un terminal de téléphonie ou de transmissions de données peut accéder à travers un réseau de téléphonie mobile ou un réseau de transmissions de données numériques à un terminal distant apte à recevoir des messages courts.

Lorsqu'un message court est envoyé, le terminal distant le reçoit, le lit et l'interprète. Il transmet alors la commande ainsi reçue au système destinataire selon un protocole approprié. Lorsque la commande est transmise, le terminal distant peut émettre à destination de l'émetteur un message d'acquittement de la commande.

Le message court envoyé est interprété comme une commande à destination du système destinataire, même si ce message court est un message destiné à être lu sur un afficheur.

Si le format du message court correspond à celui d'une commande, le système destinataire pourra alors l'interpréter comme une commande.

Si le format du message court ne correspond pas à celui d'une commande, le système destinataire ne pourra pas l'interpréter comme une commande et ce message court sera perdu.

Un objet de la présente invention est de proposer un dispositif de programmation d'équipements domestiques par messages qui ne présente pas les inconvénients de l'art antérieur.

A cet effet, est proposé un dispositif de programmation par messages d'au moins deux systèmes destinataires associés, comprenant:
- un module de réception de messages émis par un émetteur;
- un module d'analyse du message ainsi reçu;
- une interface de pilotage entre le module d'analyse et chaque système destinataire, ladite interface de pilotage étant adaptée à convertir le message en un ordre de programmation compréhensible par chaque système destinataire, lorsque le module d'analyse reconnaît le message comme étant un ordre de programmation de chaque système destinataire;
- un module de traitement de messages classiques relié au module d'analyse et adapté à traiter le message en tant que message classique lorsque le module d'analyse ne reconnaît pas le message comme étant un ordre de programmation;
- le module d'analyse reconnaissant le message comme étant un ordre de programmation par reconnaissance d'au moins un mot clé dans le message, et la reconnaissance du mot clé par le module d'analyse engendrant l'envoi d'un message de programmation vers chacun des systèmes destinataires associés.

Avantageusement le mot clé est le premier mot du message.

Avantageusement le mot clé est un mot clé générique.

Avantageusement le dispositif de programmation comprend un module d'émission de messages et l'interface de pilotage est adaptée à envoyer un message d'acquittement de la commande à l'émetteur par l'intermédiaire du module d'émission.

Avantageusement le module d'analyse est adapté à comparer l'émetteur avec une liste d'émetteurs autorisés et le module d'analyse est adapté à diriger le message vers le module de traitement de messages classiques lorsque l'émetteur n'est pas un émetteur autorisé.

Avantageusement le module d'analyse est adapté à envoyer, à l'émetteur non autorisé, un message d'information du traitement de son message en tant que message classique par le module de traitement de messages classiques.

L'invention propose aussi un téléphone caractérisé en ce qu'il comprend un dispositif de programmation selon l'une des variantes précédentes.

L'invention propose aussi un procédé de programmation d'au moins deux systèmes destinataires associés par un dispositif de programmation par messages d'au moins deux systèmes destinataires, ledit dispositif de programmation comprenant un module de réception, un module d'analyse, une interface de pilotage, un module de traitement de messages classiques,

le procédé étant caractérisé en ce qu'il comprend:
- une étape de réception du message émis par un émetteur par le module de réception;
- une étape de transfert du message reçu du module de réception vers le module d'analyse;
- une étape d'analyse du message par le module d'analyse comprenant une étape de reconnaissance d'au moins un mot clé dans le message;
- une étape d'envoi du message du module d'analyse à l'interface de pilotage, une étape de conversion du message par l'interface de pilotage et une étape de transmission à chaque système destinataire du message ainsi converti, lorsque le message a été reconnu comme étant un ordre de programmation par le module d'analyse;
- une étape d'envoi du message du module d'analyse au module dé traitement de messages classiques et une étape de traitement du message en tant que message classique par le module de traitement de messages classiques, lorsque le message n'a pas été reconnu comme étant un ordre de programmation par le module d'analyse.

Avantageusement le mot clé est un mot clé générique.

Avantageusement le procédé comprend après l'étape de transmission à chaque système destinataire du message converti, une étape d'émission d'un message d'acquittement de la commande vers l'émetteur.

Avantageusement l'étape d'envoi du message du module d'analyse à l'interface de pilotage est différée jusqu'au moment réel de début de l'ordre de programmation.

Avantageusement le procédé comprend, après l'étape d'analyse du message, une étape d'identification de l'émetteur parmi une liste d'émetteurs autorisés et lorsque l'émetteur est un émetteur autorisé, l'étape d'identification de l'émetteur est suivie de l'étape d'envoi du message du module d'analyse à l'interface de pilotage et lorsque l'émetteur n'est pas un émetteur autorisé, l'étape d'identification de l'émetteur est suivie de l'étape d'envoi du message du module d'analyse au module de traitement de messages classiques puis de l'étape de traitement du message en tant que message classique par le module de traitement de messages classiques.

Avantageusement lorsque l'émetteur n'est pas un émetteur autorisé, le procédé comprend entre l'étape d'identification de l'émetteur et l'étape d'envoi, une étape d'émission d'un message informant l'émetteur du traitement de son message en tant que message classique par le module de traitement de messages classiques.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture générale d'un réseau relié à un dispositif de programmation selon l'invention;
la Fig. 2 représente un algorithme de programmation par le dispositif de programmation selon l'invention;
la Fig. 3 représente un schéma bloc du dispositif de programmation selon l'invention.

Dans la description qui suit, on appellera "messages", tous messages provenant d'un service de messages courts (SMS en anglais, pour "Short Message Service") ou d'un service de messages multimédias (MMS en anglais pour " Multimedia Message Service") ou tout autre type de message reçu via un canal différent comme par exemple: USSD (Unstructured Supplementary Service Data), WAP (Wireless Application Protocol), UMTS (Universal Mobile Telecommunication System), IP (Internet Protocol), etc.

Ces services permettent d'envoyer ou de recevoir des messages alphanumériques et des modules audio et vidéo, à partir ou sur l'écran d'un terminal, par exemple un téléphone. Dans la description, ces messages seront appelés des messages classiques lorsqu'ils ne correspondent pas à des ordres de programmation et ils seront traités par un module de traitement de messages classiques, qui permet, par exemple, la visualisation ou l'écoute des messages classiques.

La présente description va être faite à partir d'un exemple de programmation d'un enregistreur vidéo, du type magnétoscope, mais elle peut être généralisée à tous systèmes destinataires, en particulier les appareils domestiques comme les lecteurs/enregistreurs vidéo, les alarmes, les chaudières....

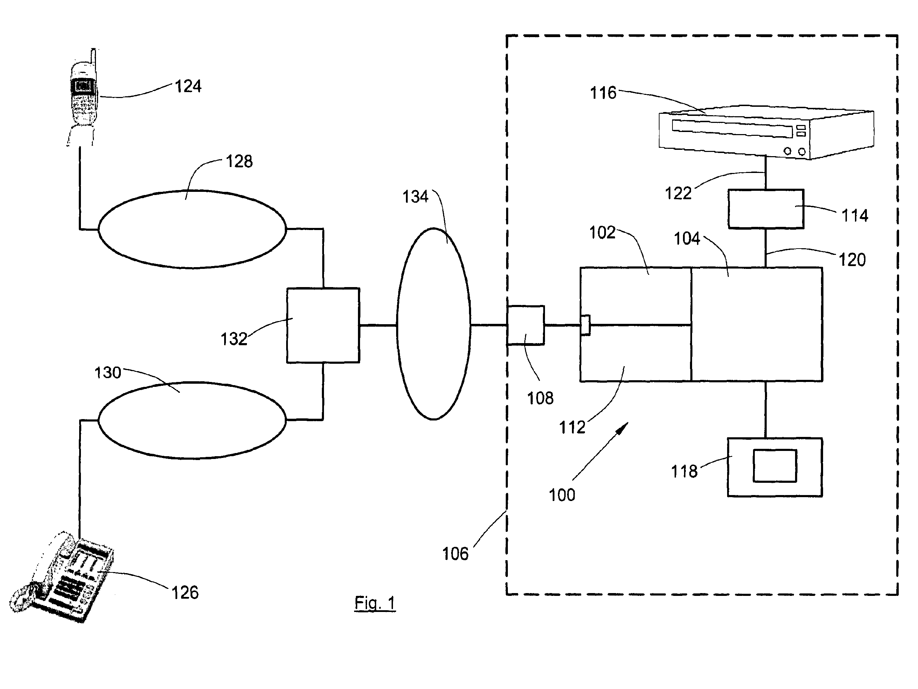

La Fig. 1 représente l'architecture générale d'un réseau relié à un dispositif de programmation 100, qui permet de programmer un système destinataire 116 en utilisant des messages.

L'invention peut être utilisée indépendamment du type de l'émetteur de messages choisi.

L'émetteur de messages peut être un terminal mobile 124, du type téléphone cellulaire, qui peut envoyer des messages à travers un réseau de télécommunications mobile 128, par exemple du type GSM ("Système mondial de communications mobiles" c'est-à-dire en anglais "Global System for Mobile Communications"), GPRS ("Service général de radiocommunication en mode paquet", c'est-à-dire en anglais "General Packet Radio Service") ou UMTS ("Système universel de télécommunications mobiles" c'est-à-dire en anglais "Universal Mobile Telecommunications System"). Le message transite alors par un serveur de messages 132 qui aiguille les messages vers des destinataires identifiés par un numéro de téléphone.

L'émetteur de messages peut être un terminal fixe 126, du type téléphone filaire, qui peut envoyer des messages à travers un premier réseau téléphonique fixe 130 jusqu'au serveur de messages 132. Le réseau téléphonique fixe 130 est avantageusement du type réseau téléphonique commuté (RTC).

Le serveur de messages 132 redirige alors le message vers le dispositif de programmation 100 à travers un deuxième réseau téléphonique fixe 134, qui peut être le même que le premier réseau téléphonique fixe 130.

Le dispositif de programmation 100 est situé dans un espace privé 106 et est connecté au deuxième réseau téléphonique fixe 134 par l'intermédiaire d'une prise téléphonique 108.

Le dispositif de programmation 100 comprend un module de réception 102 de messages, qui reçoit les messages émis par l'un des émetteurs 124, 126. Le dispositif de programmation 100 comprend aussi un module d'analyse 104, qui est prévu pour analyser le contenu du message reçu, et une interface de pilotage 114 entre le module d'analyse 104 et le système destinataire 116, qui est prévue pour recevoir le message du module d'analyse 104 et le convertir en un ordre de programmation compréhensible par le système destinataire 116.

Le dispositif de programmation 100 comprend aussi un module de traitement de messages classiques 118 relié au module d'analyse 104 et prévu pour traiter le message en tant que message classique lorsque celui-ci n'est pas destiné au système destinataire 116. Le module de traitement de messages classiques 118 peut être par exemple un afficheur de messages classiques.

Lorsque le module d'analyse 104 reconnaît le message comme étant un ordre de programmation du système destinataire 116, le message est transmis par le module d'analyse 104 à l'interface de pilotage 114, qui convertit le message et l'envoie au système destinataire 116.

Lorsque le module d'analyse 104 ne reconnaît pas le message comme étant un ordre de programmation du système destinataire 116, le message est transmis par le module d'analyse 104 au module de traitement de messages classiques 118 qui le traite comme un message classique, par exemple en l'affichant.

L'utilisation du module d'analyse 104 et le transfert du message vers l'interface de pilotage 114 ou vers le module de traitement de messages classiques 118 évite la perte d'un message si celui-ci n'est pas une commande à destination du système destinataire 116.

La transmission des données du message du module d'analyse 104 vers l'interface de pilotage 114 peut se faire par l'intermédiaire d'une fonction de pilotage, qui en sortie du module d'analyse 104, formate et transmet les données sous la forme d'un protocole approprié, dont un exemple sera donné ci-après.

L'analyse du message réalisée par le module d'analyse 104 peut être basée sur l'analyse du contenu du message, en particulier des mots qui le composent. Le message est constitué d'un ensemble d'éléments comprenant des mots clés reconnaissables par le module d'analyse 104, ces mots clés pouvant être spécifiques pour chaque système destinataire 116. Les mots clés peuvent être constitués aussi bien de caractères alphabétiques que de caractères numériques. Le module d'analyse 104 reconnaîtra le message comme étant un ordre de programmation s'il reconnaît au moins un mot clé dans le message. Avantageusement le premier mot du message sera un mot clé qui permettra au module d'analyse 104 de reconnaître le message comme un ordre de programmation du système destinataire 116. Les mots clés peuvent correspondre à des mots représentatifs des systèmes destinataires répertoriés comme par exemple "magnéto" pour un magnétoscope, ou à des mots spécifiques à l'utilisation d'un système destinataire comme par exemple "TF1" pour un magnétoscope, ou les mots clés peuvent être des mots génériques comme par exemple "CMD" pour avertir le module d'analyse 104 que le message reçu est une commande destiné à un système destinataire 116. Les mots clés peuvent aussi désigner le type de commande demandé à cet équipement comme par exemple l'enregistrement, la lecture, le rembobinage, l'allumage, l'extinction ou autres.

Le dispositif de programmation 100 peut aussi comprendre un module d'émission 112 de messages, connecté à la prise téléphonique 108. Ce module d'émission 112 est, en particulier, adapté à recevoir des messages de l'interface de pilotage 114, soit directement, soit par l'intermédiaire du module d'analyse 104. Avantageusement lorsque la commande de programmation du système destinataire 116 a été effectuée avec succès, le système destinataire 116 informe l'interface de pilotage 114 qui envoie un message d'acquittement de la commande à l'émetteur 124, 126, par l'intermédiaire du module d'émission 112, pour l'informer du succès de la programmation. De manière similaire, un message peut être envoyé dans le cas où la programmation a échouée.

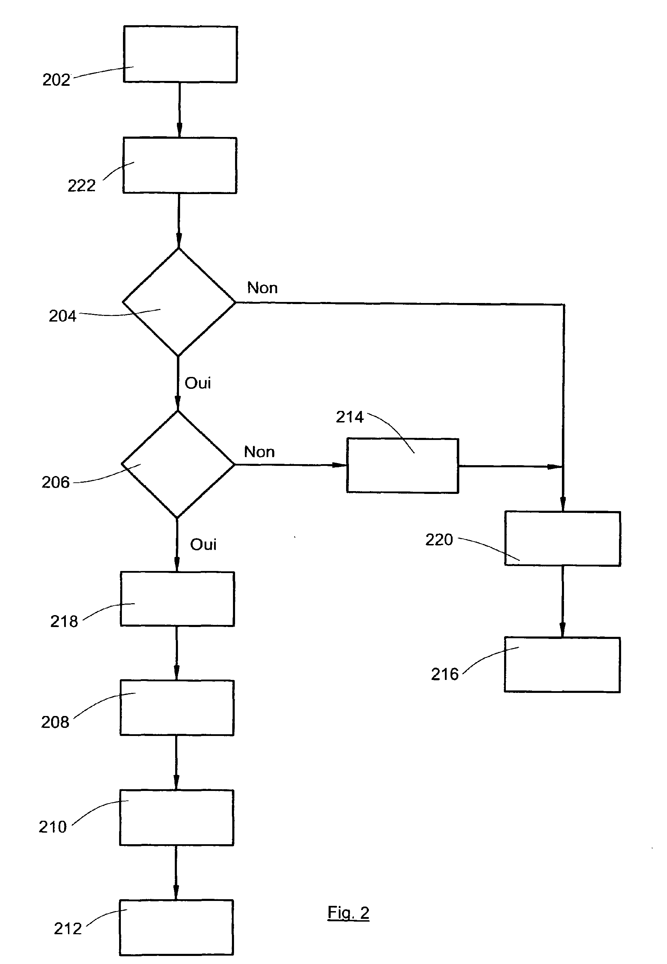

L'algorithme de la Fig. 2 reprend les différentes étapes de la programmation.

Le processus commence par une étape de réception 202, par le module de réception 102 d'un message émis par l'un des émetteurs 124, 126.

Le processus se poursuit ensuite par une étape de transfert 222 du message du module de réception 102 vers le module d'analyse 104, puis une étape d'analyse 204 du message par le module d'analyse 104, durant laquelle le module d'analyse 104 détermine si le message est une commande à destination du système destinataire 116 ou non.

Si le message a été reconnu comme étant un ordre de programmation, le processus se poursuit par une étape d'envoi 218 du message du module d'analyse 104 à l'interface de pilotage 114, puis une étape de conversion 208 du message par l'iriterface de pilotage 114 en une commande compréhensible par le système destinataire et une étape de transmission 210 du message ainsi converti vers le système destinataire 116.

Si le message n'a pas été reconnu comme étant un ordre de programmation, le processus se poursuit par une étape d'envoi 220 du message du module d'analyse 104 au module de traitement de messages classiques 118 puis une étape de traitement 216 du message par le module de traitement de messages classiques 118 en tant que message, c'est-à-dire qu'il est traité comme un message classique évitant ainsi une perte d'information.

L'étape d'analyse 204 du message peut être constituée d'une étape de reconnaissance d'au moins un mot clé dans le message, et en particulier du premier mot du message. Ce mot clé pouvant être un mot clé générique.

Lorsque l'étape de transmission 210 du message converti vers le système destinataire est terminée et que la programmation du système destinataire 116 s'est effectuée avec succès, le système destinataire 116 informe l'interface de pilotage 114 et le processus se poursuit alors par une étape d'émission 212 d'un message d'acquittement de la commande vers l'émetteur 124, 126 par l'intermédiaire du module d'émission 112. Ce message d'acquittement étant créé par l'interface de pilotage 114 est transmis au module d'émission 112 soit directement, soit par l'intermédiaire du module d'analyse 104.

Pour améliorer la sécurité et éviter la programmation du système destinataire par un émetteur non autorisé, le module d'analyse 104 compare l'émetteur 124, 126 avec une liste d'émetteurs autorisés.

Lorsque l'émetteur est un émetteur non autorisé, le message qu'il a envoyé n'est pas traité comme une commande à destination du système destinataire 116, mais est dirigé vers le module de traitement de messages classiques 118.

Le module d'analyse 104 peut alors envoyer en option, à destination de l'émetteur non autorisé par l'intermédiaire du module d'émission 112, un message, pour l'informer du traitement de son message par le module de traitement de messages classiques 118 en tant que message classique et non comme une commande. Cette caractéristique peut être avantageuse, par exemple dans le cas où un utilisateur dispose de plusieurs téléphones cellulaires et qu'il a envoyé le message avec l'un de ses téléphones qui n'est pas reconnu comme étant autorisé, permettant ainsi à l'utilisateur d'envoyer à nouveau le message avec un téléphone autorisé.

Entre l'étape d'analyse 204 du message et l'étape d'envoi 218 du message du module d'analyse 104 à l'interface de pilotage 114, le module d'analyse 104 réalise une étape d'identification 206 de l'émetteur 124, 126 parmi une liste d'émetteurs autorisés.

Lorsque l'émetteur a été reconnu comme un émetteur autorisé, le processus se poursuit par l'étape d'envoi 218 du message du module d'analyse 104 à l'interface de pilotage 114.

Par contre, lorsque l'émetteur n'a pas été reconnu comme un émetteur autorisé, l'étape d'identification 206 est suivie de l'étape d'envoi 220 du message du module d'analyse 104 au module de traitement de messages classiques 118 puis de l'étape de traitement 216 du message en tant que message classique par le module de traitement de messages classiques 118. Dans ce cas, une étape d'émission 214 d'un message par le module d'émission 112 vers l'émetteur 124, 126 et informant l'émetteur 124, 126 du traitement de son message en tant que message classique par le module de traitement de messages classiques 118 peut être réalisée entre l'étape d'identification 206 et l'étape d'envoi 220 du message du module d'analyse 104 au module de traitement de messages classiques 118.

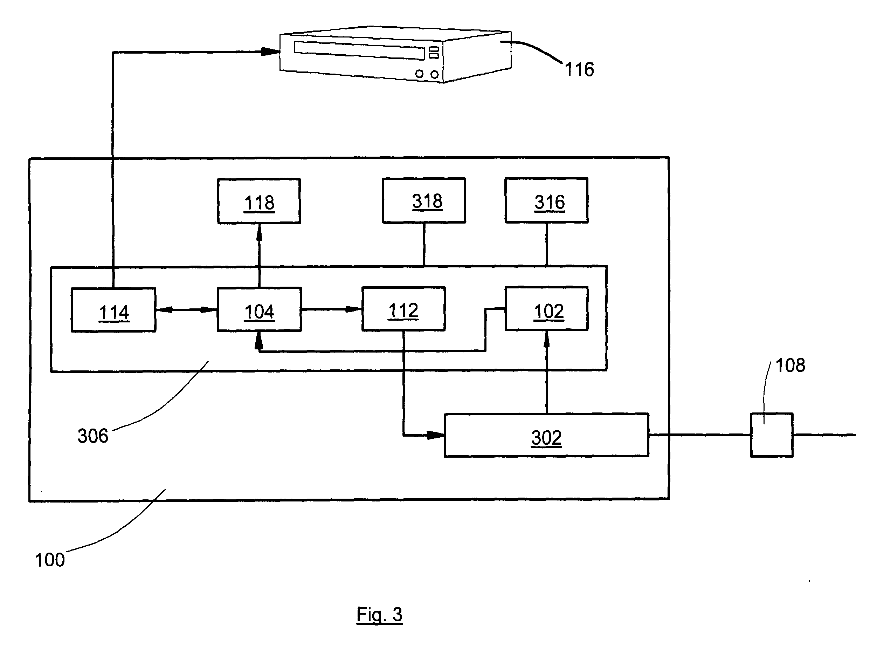

La Fig. 3 représente un exemple d'un schéma bloc du dispositif de programmation 100, qui comprend un microprocesseur 306 comprenant le module de réception 102, le module d'émission 112, le module d'analyse 104 et l'interface de pilotage 114.

De manière classique, le microprocesseur 306 est connecté d'une part à une mémoire morte 316 dans laquelle sont stockés les programmes et les données nécessaires au fonctionnement du dispositif de programmation 100, et d'autre part à une mémoire vive 318, par exemple du type EEPROM, qui contient par exemple la liste des émetteurs autorisés, la liste des systèmes destinataires 116 disponibles, la liste des mots clés reconnaissables, la liste des ordres qui peuvent être envoyés aux systèmes destinataires 116.

Le dispositif de programmation 100 comprend un module de connexion 302, qui peut comprendre par exemple un modem et une interface ligne pour permettre la réception et l'émission de message sur le deuxième réseau téléphonique 134 via la prise téléphonique 108.

Le dispositif de programmation 100 comprend aussi le module de traitement de messages classiques 118 qui reçoit les messages du module d'analyse 104, lorsqu'ils doivent être traités comme des messages classiques.

Lorsqu'un message est reçu par le module de réception 102 à travers le module de connexion 302, il est transféré au module d'analyse 104. Après analyse par le module d'analyse 104, le message est transféré soit au module de traitement de messages classiques 118, soit à l'interface de pilotage 114. L'interface de pilotage 114 convertit alors le message en une commande compréhensible par le système destinataire 116 et l'envoie à destination du système destinataire 116. Lorsque la programmation est effectuée, l'interface de pilotage 114 envoie un message au module d'émission 112, soit directement, soit par l'intermédiaire du module d'analyse 104. Le module d'émission 112 se connecte alors par l'intermédiaire du module de connexion 302 au deuxième réseau téléphonique 134, pour envoyer le message à destination de l'émetteur du message initial.

Le dispositif de programmation 100 pourra être intégré à un téléphone fixe, il pourra alors utiliser le module de connexion 302 du téléphone, permettant ainsi une réduction des coûts.

Dans d'autres modes de réalisation, le dispositif de programmation 100 pourra être intégré à l'équipement destinataire 116 ou à un ordinateur connectés à la prise téléphonique 108.

Les transmissions de données entre le module d'analyse 104 et l'interface de pilotage 114 et entre l'interface de pilotage 114 et le système destinataire 116 peuvent se faire par câble, infrarouge, Bluetooth, Wi-Fi, courant porteur ou autres, chacun de ces éléments doit alors être muni d'un dispositif d'émission/réception adéquat.

Dans le cas où la transmission des données du message du module d'analyse 104 vers l'interface de pilotage 114 se fait par l'intermédiaire d'une fonction de pilotage, le protocole de transmission des données du message du module d'analyse 104 à l'interface de pilotage 114 peut être du type:
- envoi d'un signal de demande de connexion de la fonction de pilotage vers l'interface de pilotage 114;
- envoi d'un signal d'acceptation de la connexion de l'interface de pilotage 114 vers la fonction de pilotage;
- envoi des données du message de la fonction de pilotage vers l'interface de pilotage 114;
- envoi d'un signal d'acceptation de la programmation de l'interface de pilotage 114 vers la fonction de pilotage;
- envoi d'un signal de déconnexion de la fonction de pilotage vers l'interface de pilotage 114.

On va maintenant décrire un exemple de message à destination d'un système destinataire 116 du type enregistreur vidéo à partir d'un programme de télévision.

La structure du message peut être alors du type: "chaîne /date /heure début /heure fin". Pour distinguer les différents éléments du message, on peut utiliser un caractère neutre du type "/", ce qui facilitera l'analyse du message par le module d'analyse 104. En effet, l'utilisation d'un caractère neutre permet d'identifier les mots constituants le message par reconnaissance de ce caractère neutre.

Par exemple, si l'on souhaite enregistrer le programme de TF 1 le 28 février 2004 de 13h00 à 14h00, le message sera "TF1/28022004/13h00/14h00".

Le mot clé reconnu par le module d'analyse sera alors la chaîne de télévision, il identifiera alors le reste du message comme une volonté de programmation de l'enregistreur vidéo.

L'ensemble des mots clés reconnaissables par le module d'analyse 104 peut être défini lors de la fabrication du dispositif de programmation 100, mais il peut être aussi enregistré au moment de l'installation du dispositif de programmation 100, permettant ainsi de définir des mots clés spécifiques à chaque utilisateur et à chaque système destinataire 116.

Pour faciliter l'utilisation des messages, il est avantageux d'autoriser des variations dans la frappe des mots clés, ce qui évite les erreurs. Par exemple, seules les lettres majuscules seront significatives, ainsi toutes les lettres en minuscules seront transformées en majuscules par le module d'analyse 104 avant leur analyse, par exemple "tF1" sera alors transformé en "TF1". Il peut être aussi envisagé de ne pas tenir compte des espaces dans le message, ainsi 'TF 1 " sera transformé en "TF1" avant son analyse.

L'interface de pilotage 114 doit, dans l'exemple convertir le mot clé "TF1" en une commande de programmation de la chaîne "TF1" sur le magnétoscope. Ces équivalences peuvent être, comme précédemment, définies lors de la fabrication du dispositif de programmation 100, mais elles peuvent être aussi enregistrées au moment de l'installation du dispositif de programmation 100.

Dans le cas où plusieurs systèmes destinataires 116 sont connectés au dispositif de programmation 100, le mot clé du message reconnaissable par le module d'analyse 104 peut alors être le nom du système destinataire 116 ou un numéro défini lors de l'installation. Dans ce cas, il est possible que les systèmes destinataires 116 soient connectés à la même interface de pilotage 114 ou il est possible qu'il existe une interface de pilotage 114 par système destinataire 116, dans ce cas toutes les interfaces de pilotage 114 sont connectées au module d'analyse 104 qui par analyse du message détermine le système destinataire 116 concerné et envoie le message à l'interface de pilotage 114 correspondante.

Il peut aussi être mis en oeuvre un procédé de mise en correspondance d'un ensemble de mots clés avec chacun des différents systèmes destinataires 116. Par exemple, par la reconnaissance de la chaîne de caractère "TF1 ", le module d'analyse 104 reconnaît que le message correspond à un message de programmation à destination du magnétoscope. Si l'analyse de la suite du message par le module d'analyse 104 montre que le message est un message de programmation valide, celui-ci sera envoyé au magnétoscope via l'interface de pilotage 114.

Il est possible que plusieurs systèmes destinataires 116 soient nécessaires pour parvenir au résultat voulu par l'utilisateur, par exemple lorsque l'enregistrement d'une émission nécessite à la fois la programmation du magnétoscope et la programmation d'un décodeur numérique.

Dans l'exemple précédent et en supposant que la chaîne TF1 soit reçue via un décodeur satellite, le message pourra prendre la forme:
"magnéto/satellite/28022004/13h00/14h00/décodeur/TF1", c'est-à-dire que le magnétoscope doit enregistrer le programme du satellite le 28 février 2004 de 13h00 à 14h00 et que le décodeur doit se positionner sur la chaîne TF 1.

Selon un autre mode de réalisation, par exemple, le message pourra être similaire au mode de réalisation dans lequel il n'y avait pas de décodeur satellite, à savoir "TF1/28022004/13h00/14h00", mais lors de l'analyse du message, le module d'analyse 104 reconnaît qu'il y a deux systèmes destinataires 116, dans l'exemple le décodeur satellite et le magnétoscope, et il envoie, via l'interface de pilotage 114, un premier message au magnétoscope sous la forme "satellite/28022004/13h00/14h00" pour qu'il se programme sur le décodeur satellite, et il envoie un deuxième message au décodeur sous la forme "TF 1" pour que le décodeur se connecte sur TF1.

Le décodeur numérique peut être un démodulateur de type DVB-S (satellite), DVB-C( câble), DVB-T (télévision numérique de terre), un équipement haut débit (ADSL) ou autres.

D'une manière générale, le dispositif de programmation 100 peut être connecté à au moins deux systèmes destinataires 116 associés, par exemple le magnétoscope et le décodeur, et la reconnaissance du mot clé,par exemple "TF1" par le module d'analyse 104 engendre l'envoi d'un message de programmation vers chacun des systèmes destinataires 116 associés.

Pour que la programmation ne soit pas changée entre le moment où le module d'analyse 104 transmet l'ordre à l'interface de pilotage 114 et le départ réel de l'action programmée, par exemple le début de l'enregistrement, le module d'analyse 104 peut être apte à mémoriser les messages et à ne les envoyer que quelques secondes avant le début de l'action.

Il est aussi possible de programmer le magnétoscope dés la réception du message, mais de ne programmer le décodeur que quelques secondes avant le début de l'enregistrement. L'ordre de programmation du décodeur sera mis en mémoire par le module d'analyse 104 et ne sera transmis à l'interface de pilotage 114 qu'au moment opportun.

L'étape d'envoi du message du module d'analyse 104 à l'interface de pilotage 114 est alors différée jusqu'au moment réel de début de l'ordre de programmation.

Bien entendu, la présente invention n'est pas limitée aux exemples et modes de réalisation décrits et représentés, mais elle est susceptible de nombreuses variantes accessibles à l'homme de l'art.

Par exemple, le dispositif de programmation a été décrit à partir d'un microprocesseur 306 comprenant le module de réception 102, le module d'émission 112, le module d'analyse 104 et l'interface de pilotage 114, mais ces modules peuvent être distincts du processeur, qui n'intervient que pour les piloter.

Les différents modules peuvent être répartis différemment, par exemple, l'interface de pilotage 114 peut être intégrée dans le système destinataire 116.

## Revendications

1. Dispositif de programmation (100) par messages d'au moins deux systèmes destinataires (116) associés, comprenant:
- un module de réception (102) de messages émis par un émetteur (124, 126);
- un module d'analyse (104) du message ainsi reçu;
- une interface de pilotage (114) entre le module d'analyse (104) et chaque système destinataire (116), ladite interface de pilotage étant adaptée à convertir le message en un ordre de programmation compréhensible par chaque système destinataire (116), lorsque le module d'analyse (104) reconnaît le message comme étant un ordre de programmation de chaque système destinataire (116);
- un module de traitement de messages classiques (118) relié au module d'analyse (104) et adapté à traiter le message en tant que message classique lorsque le module d'analyse (104) ne reconnaît pas le message comme étant un ordre de programmation;
- le module d'analyse (104) reconnaissant le message comme étant un ordre de programmation par reconnaissance d'au moins un mot clé dans le message, et la reconnaissance du mot clé par le module d'analyse (104) engendrant l'envoi d'un message de programmation vers chacun des systèmes destinataires (116) associés.

2. Dispositif de programmation (100) selon la revendication 1, **caractérisé en ce que** le mot clé est le premier mot du message.

3. Dispositif de programmation (100) l'une des revendications 1 à 2, **caractérisé en ce que** le mot clé est un mot clé générique.

4. Dispositif de programmation (100) selon l'une des revendications 1 à 3, **caractérisé en ce qu'**il comprend un module d'émission (112) de messages et **en ce que** l'interface de pilotage (114) est adaptée à envoyer un message d'acquittement de la commande à l'émetteur (124, 126) par l'intermédiaire du module d'émission (112).

5. Dispositif de programmation (100) selon l'une des revendications 1 à 4, **caractérisé en ce que** le module d'analyse (104) est adapté à comparer l'émetteur (124, 126) avec une liste d'émetteurs autorisés et **en ce que** le module d'analyse (104) est adapté à diriger le message vers le module de traitement de messages classiques (118) lorsque l'émetteur (124, 126) n'est pas un émetteur autorisé.

6. Dispositif de programmation (100) selon la revendication 5, **caractérisé en ce que** le module d'analyse (104) est adapté à envoyer, à l'émetteur non autorisé, un message d'information du traitement de son message en tant que message classique par le module de traitement de messages classiques (118).

7. Téléphone **caractérisé en ce qu'**il comprend un dispositif de programmation (100) selon l'une des revendications précédentes.

8. Procédé de programmation d'au moins deux systèmes destinataires associés (116), par un dispositif de programmation (100) par messages d'au moins deux systèmes destinataires (116), ledit dispositif de programmation comprenant un module de réception (102), un module d'analyse (104), une interface de pilotage (114), un module de traitement de messages classiques (118),
le procédé étant **caractérisé en ce qu'**il comprend:
- une étape de réception (202) du message émis par un émetteur (124, 126) par le module de réception (102);
- une étape de transfert (222) du message reçu du module de réception (102) vers le module d'analyse (104);
- une étape d'analyse (204) du message par le module d'analyse (104) comprenant une étape de reconnaissance d'au moins un mot clé dans le message;
- une étape d'envoi (218) du message du module d'analyse (104) à l'interface de pilotage (114), une étape de conversion (208) du message par l'interface de pilotage (114) et une étape de transmission (210) à chaque système destinataire (116) du message ainsi converti, lorsque le message a été reconnu comme étant un ordre de programmation par le module d'analyse (104);
- une étape d'envoi (220) du message du module d'analyse (104) au module de traitement de messages classiques (118) et une étape de traitement (216) du message en tant que message classique par le module de traitement de messages classiques (118), lorsque le message n'a pas été reconnu comme étant un ordre de programmation par le module d'analyse (104).

9. Procédé selon la revendication 8, **caractérisé en ce que** le mot clé est un mot clé générique.

10. Procédé selon la revendication 8 ou 9, **caractérisé en ce qu'**il comprend après l'étape de transmission (210) à chaque système destinataire (116) du message converti, une étape d'émission (212) d'un message d'acquittement de la commande vers l'émetteur (124, 126).

11. Procédé selon l'une des revendications 8 à 10, **caractérisé en ce que** l'étape d'envoi (218) du message du module d'analyse (104) à l'interface de pilotage (114) est différée jusqu'au moment réel de début de l'ordre de programmation.

12. Procédé selon l'une des revendications 8 à 11, **caractérisé en ce qu'**il comprend, après l'étape d'analyse (204) du message, une étape d'identification (206) de l'émetteur (124, 126) parmi une liste d'émetteurs autorisés et **en ce que** lorsque l'émetteur (124, 126) est un émetteur autorisé, l'étape d'identification (206) de l'émetteur est suivie de l'étape d'envoi (218) du message du module d'analyse (104) à l'interface de pilotage (114) et **en ce que** lorsque l'émetteur (124, 126) n'est pas un émetteur autorisé, l'étape d'identification (206) de l'émetteur est suivie de l'étape d'envoi (220) du message du module d'analyse (104) au module de traitement de messages classiques (118) puis de l'étape de traitement (216) du message en tant que message classique par le module de traitement de messages classiques (118).

13. Procédé selon la revendication 12, **caractérisé en ce que** lorsque l'émetteur (124, 126) n'est pas un émetteur autorisé, il comprend entre l'étape d'identification (206) de l'émetteur et l'étape d'envoi (220), une étape d'émission (214) d'un message informant l'émetteur du traitement de son message en tant que message classique par le module de traitement de messages classiques (118).
